# EUROPÄISCHE PATENTANMELDUNG

(11) **EP 4 030 549 A1**
(43) Veröffentlichungstag der Anmeldung: **20.07.2022**
(21) Anmeldenummer: 22151612.3
(22) Anmeldetag: 14.01.2022
(51) Int. Cl.: H01M 50/502, H01M 50/519, H01M 50/204

(54) **ELEKTRISCHER ENERGIESPEICHER UND VERFAHREN ZUR MONTAGE DES ELEKTRISCHEN ENERGIESPEICHERS**

(30) Priorität: 15.01.2021 DE 102021100805
(71) Anmelder: Yazaki Systems Technologies GmbH, 93059 Regensburg (DE)
(72) Erfinder: JUNGTÄUBL, Daniel, 93049 Regensburg (DE); FRANK, Lennart, 93059 Regensburg (DE)
(74) Vertreter: Patentanwaltskanzlei WILHELM & BECK

(57) **Zusammenfassung**

Die Erfindung betrifft einen elektrischen Energiespeicher (10) und ein Verfahren zur Herstellung des elektrischen Energiespeichers (10), wobei der elektrische Energiespeicher (10) ein Gehäuse (15), eine erste elektrische Energiespeicherzelle (20) und eine erste elektrisch leitfähige Anschlusslasche (45) aufweist, wobei das Gehäuse (15) ein einen Gehäuseinnenraum (75) begrenzendes erstes Gehäuseteil (65) und ein zweites Gehäuseteil (70) aufweist, wobei in dem Gehäuseinnenraum (75) die erste elektrische Energiespeicherzelle (20) und die erste Anschlusslasche (45) angeordnet sind und die erste Anschlusslasche (45) mit einem ersten elektrischen Anschluss (170) der ersten elektrischen Energiespeicherzelle (20) elektrisch verbunden ist, wobei das zweite Gehäuseteil (70) innenseitig ein elektrisch leitfähiges Kontaktelement (125) aufweist, das sich entlang einer ersten Richtung in dem Gehäuseinnenraum (75) erstreckt, wobei das erste Gehäuseteil (65) ein erstes bügelförmig ausgebildetes Anpresselement (85) aufweist, wobei die erste Anschlusslasche (45) zumindest abschnittsweise zwischen dem ersten Anpresselement (85) und dem Kontaktelement (125) angeordnet ist, wobei ein erstes freies Ende (100) des ersten Anpresselements (85) die erste Anschlusslasche (45) an das Kontaktelement (125) zur elektrischen Verbindung der ersten Anschlusslasche (45) mit dem Kontaktelement (125) anpresst.

## Beschreibung

Die Erfindung betrifft einen elektrischen Energiespeicher gemäß Patentanspruch 1 und ein Verfahren zur Montage des elektrischen Energiespeichers gemäß Patentanspruch 12.

Es sind Traktionsbatterien für ein Kraftfahrzeug bekannt. Die Traktionsbatterie weist mehrere elektrische Energiezellen auf. Jede der Energiezellen ist mit einem Batteriemanagementsystem elektrisch verbunden. Dazu werden die Energiezellen einzeln mittels elektrischer Kabel mit einer Leiterplatte des Batteriemanagementsystems elektrisch verbunden.

Es ist Aufgabe der Erfindung, einen verbesserten elektrischen Energiespeicher und ein verbessertes Verfahren zur Herstellung des elektrischen Energiespeichers bereitzustellen.

Diese Aufgabe wird mittels eines elektrischen Energiespeichers gemäß Patentanspruch 1 und mittels eines Verfahrens gemäß Patentanspruch 12 gelöst. Vorteilhafte Ausführungsformen sind in den abhängigen Ansprüchen angegeben.

Es wurde erkannt, dass ein verbesserter elektrischer Energiespeicher, insbesondere eine Traktionsbatterie eines elektrischen Kraftfahrzeugs, dadurch bereitgestellt werden kann, dass der elektrische Energiespeicher ein Gehäuse, eine erste elektrische Energiespeicherzelle und eine erste elektrisch leitfähige Anschlusslasche aufweist. Das Gehäuse weist ein einen Gehäuseinnenraum begrenzendes erstes Gehäuseteil und ein zweites Gehäuseteil auf. In dem Gehäuseinnenraum sind die erste elektrische Energiespeicherzelle und die erste Anschlusslasche angeordnet. Die erste Anschlusslasche ist mit einem ersten elektrischen Anschluss der ersten elektrischen Energiespeicherzelle elektrisch verbunden. Das zweite Gehäuseteil weist innenseitig ein elektrisch leitfähiges Kontaktelement auf, das entlang einer ersten Richtung in den Gehäuseinnenraum ragt. Das erste Gehäuseteil weist einen den Gehäuseinnenraum verschließenden ersten Gehäuseabschnitt und ein erstes bügelförmig ausgebildetes Anpresselement auf. Das erste Anpresselement ist mit einem ersten festen Ende innenseitig an dem ersten Gehäuseabschnitt befestigt. Die erste Anschlusslasche ist zumindest abschnittsweise zwischen dem ersten Anpresselement und dem Kontaktelement angeordnet. Ein erstes freies Ende des ersten Anpresselements presst die erste Anschlusslasche an das Kontaktelement zur elektrischen Verbindung der ersten Anschlusslasche mit dem Kontaktelement.

Diese Ausgestaltung hat den Vorteil, dass in der Montage des elektrischen Energiespeichers die Anschlusslasche bei der Montage des ersten und zweiten Gehäuseteils automatisch mit dem Kontaktelement kontaktiert wird, sodass der elektrische Energiespeicher besonders schnell und einfach montiert werden kann. Auf zusätzliche Montageschritte kann dadurch verzichtet werden. Insbesondere ist hier von Vorteil, wenn der erste elektrische Anschluss der ersten elektrischen Energiespeicherzelle mit einem Batteriemanagementsystem verbunden wird und beispielsweise über den ersten elektrischen Anschluss eine Information über einen Betriebsparameter, beispielsweise eine Spannung der ersten elektrischen Energiespeicherzelle, dem Batteriemanagementsystem bereitgestellt werden kann.

In einer weiteren Ausführungsform weist der elektrische Energiespeicher eine zweite elektrische Energiespeicherzelle und eine zweite Anschlusslasche auf. Die zweite elektrische Energiespeicherzelle ist in einer zu der ersten Richtung geneigt verlaufenden zweiten Richtung versetzt zu der ersten Energiespeicherzelle angeordnet. Die zweite Anschlusslasche ist mit einem zweiten elektrischen Anschluss der zweiten elektrischen Energiespeicherzelle verbunden. Das erste Gehäuseteil weist ein zweites bügelförmig ausgebildetes Anpresselement auf, das versetzt zu dem ersten Anpresselement angeordnet ist. Ein zweites festes Ende des zweiten Anpresselements ist an dem ersten Gehäuseabschnitt befestigt. Die zweite Anschlusslasche ist auf einer zur ersten Anschlusslasche gegenüberliegenden Seite zwischen dem zweiten Anpresselement und dem Kontaktelement angeordnet. Ein zweites freies Ende des zweiten Anpresselements presst die zweite Anschlusslasche an das Kontaktelement zur elektrischen Verbindung der zweiten Anschlusslasche mit dem Kontaktelement. Diese Ausgestaltung hat den Vorteil, dass mehrere Anschlusslaschen, die elektrisch jeweils mit einer zugeordneten elektrischen Energiespeicherzelle verbunden sind, durch das jeweils zugeordnete Anpresselement in der Montage der elektrischen Energiespeicherzelle auf einfach Art und Weise mit einem Kontaktelement verbunden werden.

In einer weiteren Ausführungsform weist die erste Anschlusslasche eine erste Seitenfläche und eine in der zweiten Richtung gegenüberliegend zu der ersten Seitenfläche angeordnete zweite Seitenfläche auf. Die erste Seitenfläche ist dem ersten Anpresselement zugewandt und die zweite Seitenfläche ist dem Kontaktelement zugewandt. In der ersten Seitenfläche ist eine erste Einbuchtung angeordnet, wobei in die erste Einbuchtung das erste freie Ende des ersten Anpresselements eingreift. Diese Ausgestaltung hat den Vorteil, dass ein Abrutschen des ersten Anpresselements von der Anschlusslasche, beispielsweise bei starken Vibrationen, verhindert wird.

In einer weiteren Ausführungsform formt die erste Einbuchtung an der zweiten Seitenfläche eine erste Ausbuchtung aus, wobei das Kontaktelement an einer umfangsseitig angeordneten ersten Kontaktfläche eine erste Aufnahmenut aufweist, wobei die erste Ausbuchtung in die erste Aufnahmenut eingreift. Diese Ausgestaltung stellt einen besonders guten elektrischen Kontakt zwischen der ersten Anschlusslasche und dem Kontaktelement sicher. Ferner wird ein Abrutschen der ersten Anschlusslasche von dem Kontaktelement beim Anpressen verhindert.

In einer weiteren Ausführungsform weist das Kontaktelement eine im Wesentlichen quaderförmige Grundform auf, wobei das Kontaktelement umfangsseitig eine zweite Kontaktfläche aufweist, wobei die zweite Anschlusslasche an die zweite Kontaktfläche angepresst ist. Die quaderförmige Ausgestaltung des Kontaktelements hat den Vorteil, dass der Bereich, in dem die zweite Anschlusslasche an die zweite Kontaktfläche gepresst wird, besonders groß ist. Ebenso ist die Fläche, mit der die erste Anschlusslasche an die erste Kontaktfläche gepresst wird, besonders groß, sodass ein ohmscher Kontaktwiderstand zwischen der jeweils zugeordneten Anschlusslasche und der entsprechenden Kontaktfläche besonders gering ist. Damit wird sichergestellt, dass eine Übertragung einer Information, beispielsweise eines Betriebsparameters, der ersten und/oder zweiten elektrischen Energiespeicherzelle für ein Batteriemanagementsystem zuverlässig ist und dadurch die Funktionssicherheit des elektrischen Energiespeichers sichergestellt ist.

In einer weiteren Ausführungsform weist die zweite Kontaktfläche eine zweite Aufnahmenut auf, wobei die zweite Anschlusslasche eine dritte Seitenfläche und eine gegenüberliegend zu der dritten Seitenfläche angeordnete vierte Seitenfläche aufweist. Die dritte Seitenfläche ist dem Kontaktelement zugewandt und die vierte Seitenfläche ist dem zweiten Anpresselement zugewandt. In der vierten Seitenfläche ist eine zweite Einbuchtung und in der dritten Seitenfläche eine zweite Ausbuchtung angeordnet. In die zweite Einbuchtung greift das zweite freie Ende des zweiten Anpresselements ein. Die zweite Ausbuchtung greift in die zweite Aufnahmenut ein. Diese Ausgestaltung hat den Vorteil, dass beidseitig das Kontaktelement von den Anschlusslaschen kontaktiert wird und ein Überbiegen des Kontaktelements durch das Anpresselement durch die Anordnung des Kontaktelements zwischen dem ersten freien Ende des ersten Anpresselements und des zweiten freien Endes des zweiten Anpresselements verhindert wird. Ferner wird dadurch im Wesentlichen am Kontaktelement ein Kräftegleichgewicht eingestellt.

In einer weiteren Ausführungsform weist das zweite Gehäuseteil einen elektrischen Leiter und einen den Gehäuseinnenraum begrenzenden zweiten Gehäuseabschnitt auf. Der elektrische Leiter ist mit dem zweiten Gehäuseabschnitt mechanisch verbunden. Der elektrische Leiter ist ferner mit dem Kontaktelement elektrisch verbunden. Der elektrische Leiter ist mit einem Batteriemanagementsystem elektrisch verbindbar. Diese Ausgestaltung hat den Vorteil, dass auf ein aufwendiges Kabelziehen zwischen dem Batteriemanagementsystem und dem ersten Anschluss verzichtet werden kann. Insbesondere ist von Vorteil, wenn beispielsweise das Kontaktelement aus einem elektrisch leitfähigen Kunststoff hergestellt ist und dadurch durch einen einfachen Zweikomponentenspritzguss der elektrische Leiter mit dem Kontaktelement elektrisch verbunden werden kann.

In einer weiteren Ausführungsform sind das erste Anpresselement und der erste Gehäuseabschnitt einstückig und materialeinheitlich ausgebildet. Diese Ausgestaltung hat den Vorteil, dass das erste Gehäuseteil und damit das erste Anpresselement und der erste Gehäuseabschnitt im Rahmen eines Spritzgussverfahrens beispielsweise aus einem Kunststoff einfach und kostengünstig hergestellt werden können.

In einer weiteren Ausführungsform sind das erste Anpresselement, das zweite Anpresselement und der zwischen dem ersten Anpresselement und dem zweiten Anpresselement angeordnete erste Gehäuseabschnitt C-förmig ausgebildet. Diese Ausgestaltung ist besonders spannungstechnisch günstig, sodass ein Abbrechen des ersten Anpresselements und/oder des zweiten Anpresselements vom ersten Gehäuseabschnitt vermieden wird.

In einer weiteren Ausführungsform weist der elektrische Energiespeicher einen Verbindungssteg auf. Der Verbindungssteg ist zwischen der ersten Anschlusslasche und der zweiten Anschlusslasche angeordnet. Der Verbindungssteg verbindet die erste Anschlusslasche auf einer zur ersten elektrischen Energiespeicherzelle abgewandten Seite mit der zweiten Anschlusslasche elektrisch und mechanisch. Der Verbindungssteg erstreckt sich entlang der zweiten Richtung, wobei der Verbindungssteg auf einer zur ersten elektrischen Energiespeicherzelle abgewandten Seite des Kontaktelements am Kontaktelement vorbeigeführt ist. Diese Ausgestaltung hat den Vorteil, dass ein Bauraumbedarf innerhalb des Gehäuseinnenraums besonders gering ist. Durch die mechanische Verbindung der ersten Anschlusslasche mit der zweiten Anschlusslasche wird verhindert, dass die erste und/oder zweite Anschlusslasche beim Anpressen durch das jeweils zugeordnete Anpresselement an das Kontaktelement eine definierte Ausrichtung nach dem Anpressen aufweist.

In einer weiteren Ausführungsform sind die erste Anschlusslasche, die zweite Anschlusslasche und der Verbindungsteg aus einem Bandmaterial, beispielsweise aus einem Blechband, einstückig und materialeinheitlich ausgeformt. Dadurch kann die Bauteilanzahl des elektrischen Energiespeichers geringgehalten werden und er kann besonders kostengünstig hergestellt werden.

In einem Verfahren zur Montage des oben beschriebenen elektrischen Energiespeichers werden die erste elektrische Energiespeicherzelle, das Gehäuse mit dem ersten Gehäuseteil und dem zweiten Gehäuseteil und die erste Anschlusslasche bereitgestellt. Die erste Anschlusslasche wird mit dem ersten Anschluss der ersten elektrischen Energiespeicherzelle elektrisch verbunden. Die erste Anschlusslasche und die erste elektrische Energiespeicherzelle werden in dem Gehäuseinnenraum derart angeordnet, dass die erste Anschlusslasche zumindest abschnittsweise neben oder an dem Kontaktelement angeordnet ist. Das erste Gehäuseteil wird an dem zweiten Gehäuseteil angeordnet. Das erste freie Ende des ersten Anpresselements presst die erste Anschlusslasche an das Kontaktelement. Dadurch erzeugt das erste Anpresselement einen elektrischen Kontakt zwischen der ersten Anschlusslasche und dem Kontaktelement, wenn das erste Gehäuseteil am zweiten Gehäuseteil angeordnet wird.

In einer weiteren Ausführungsform wird die erste Anschlusslasche, eine zweite Anschlusslasche und ein Verbindungssteg aus einem Bandmaterial U-förmig gebogen, sodass der Verbindungssteg zwischen der ersten Anschlusslasche und der zweiten Anschlusslasche angeordnet ist und im Wesentlichen sich geneigt zu einer Haupterstreckungsrichtung der ersten Anschlusslasche erstreckt. Ferner wird die zweite elektrische Energiespeicherzelle bereitgestellt. Die zweite Anschlusslasche wird mit dem zweiten Anschluss der zweiten elektrischen Energiespeicherzelle elektrisch verbunden. Das Kontaktelement wird zwischen dem Verbindungssteg und der ersten elektrischen Energiespeicherzelle sowie zwischen der ersten Anschlusslasche und der zweiten Anschlusslasche eingefügt. Dadurch kann die Anzahl der Kontaktelemente und der elektrischen Leitungen gering gehalten werden.

In einer weiteren Ausführungsform ist die erste Anschlusslasche zumindest abschnittsweise plattenförmig ausgebildet. Das erste Anpresselement wirkt mit einer ersten Presskraft auf die erste Anschlusslasche. Die erste Presskraft presst die erste Anschlusslasche in eine erste Aufnahmenut des Kontaktelements. In die erste Anschlusslasche wird plastisch eine erste Einbuchtung an einer ersten Seitenfläche der ersten Anschlusslasche und eine erste Ausbuchtung an einer zweiten Seitenfläche der ersten Anschlusslasche ausformt. Dadurch kann auf das Prägen der ersten Einbuchtung und/oder der ersten Ausbuchtung in der Herstellung der ersten Anschlusslasche verzichtet werden, sodass ein Werkzeug zur Herstellung der ersten Anschlusslasche besonders einfach und kostengünstig ausgebildet ist.

In einer weiteren Ausführungsform ist die zweite Anschlusslasche plattenförmig ausgebildet. Ein zweites Anpresselement des zweiten Gehäuseteils wirkt mit einer zweiten Presskraft auf die zweite Anschlusslasche. Die zweite Presskraft ist gegen die erste Presskraft gerichtet. Die zweite Presskraft presst die zweite Anschlusslasche in eine zweite Aufnahmenut des Kontaktelements, die auf einer der ersten Aufnahmenut gegenüberliegenden Seite des Kontaktelements angeordnet ist und eine zweite Einbuchtung und eine zweite Ausbuchtung plastisch einformt.

Nachfolgend wird die Erfindung anhand von Figuren näher erläutert. Dabei zeigen:
Figur 1 eine Draufsicht auf einen geöffneten elektrischen Energiespeicher;
Figur 2eine perspektivische Ansicht des in Figur 1 gezeigten elektrischen Energiespeichers;
Figur 3eine vergrößerte Draufsicht auf das in Figur 2 gezeigte Kontaktelement;
Figur 4eine Draufsicht auf den elektrischen Energiespeicher in teilmontiertem Zustand;
Figur 5einen Ausschnitt einer Schnittansicht entlang einer in Figur 1 gezeigten Schnittebene B-B durch den in Figur 1 gezeigten elektrischen Energiespeicher;
Figur 6eine Draufsicht auf eine Anordnung aus der ersten und zweiten elektrischen Energiespeicherzelle und der ersten und zweiten Anschlusslasche und dem Verbindungssteg.

In den nachfolgenden Figuren wird zum erleichterten Verständnis auf ein Koordinatensystem Bezug genommen. Das Koordinatensystem weist eine x-Achse (Längsrichtung), eine y-Achse (Querrichtung) und eine z-Achse (Höhenrichtung) auf. Das Koordinatensystem ist beispielhaft als Rechtssystem ausgebildet.

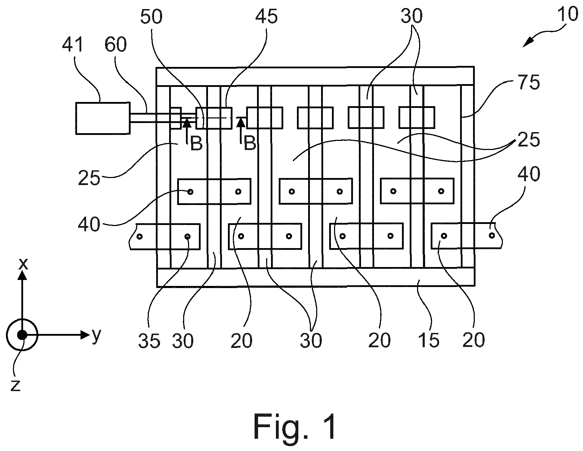

Figur 1 zeigt eine Draufsicht auf einen geöffneten elektrischen Energiespeicher 10.

Der elektrische Energiespeicher 10 ist in der Ausführungsform beispielhaft als Traktionsbatterie für ein Fahrzeug, insbesondere ein Hybridfahrzeug oder ein rein elektrisch betriebenes Fahrzeug, ausgebildet. Das Kraftfahrzeug kann beispielsweise als Pkw, Motorrad oder Leicht-Lkw ausgebildet sein. Die in dem elektrischen Energiespeicher 10 gespeicherte elektrische Energie dient dazu, einen Antriebsmotor des Kraftfahrzeugs anzutreiben, um das Kraftfahrzeug zu bewegen.

Der elektrische Energiespeicher 10 weist ein Gehäuse 15 und wenigstens eine Anordnung aus einer ersten elektrischen Energiespeicherzelle 20 und einer zweiten elektrischen Energiespeicherzelle 25 auf. In der Ausführungsform weist die Anordnung von ersten und zweiten elektrischen Energiespeicherzellen 20, 25 jeweils mehrere abwechselnd nebeneinander angeordnete elektrische Energiespeicherzellen 20, 25 auf. Die Anzahl der vorgesehenen elektrischen Energiespeicherzellen 20, 25 ist beispielhaft und wird in Abhängigkeit einer bereitzustellenden Spannung und eines bereitzustellenden elektrischen Stroms entsprechend gewählt.

In der Ausführungsform ist beispielhaft die erste elektrische Energiespeicherzelle 20 in Querrichtung neben der zweiten elektrischen Energiespeicherzelle 25 angeordnet. Zusätzlich kann der elektrische Energiespeicher 10 eine Kühlvorrichtung 30 aufweisen, wobei beispielsweise in Querrichtung zwischen der ersten elektrischen Energiespeicherzelle 20 und der zweiten elektrischen Energiespeicherzelle 25 die Kühlvorrichtung 30 angeordnet ist. Die Kühlvorrichtung 30 dient zur Kühlung der ersten elektrischen Energiespeicherzelle 20 und/oder der zweiten elektrischen Energiespeicherzelle 25 beim Laden oder Entladen der elektrischen Energiespeicherzelle 20, 25. Auch wäre möglich, dass die erste elektrische Energiespeicherzelle 20 direkt an der zweiten elektrischen Energiespeicherzelle 25 anliegt.

In der Ausführungsform sind die elektrischen Energiespeicherzellen 20, 25 beispielhaft in Reihe geschaltet. Der elektrische Energiespeicher 10 weist einen ersten Leistungsanschluss 35 und einen zweiten Leistungsanschluss 40 auf, wobei der erste Leistungsanschluss 35 und der zweite Leistungsanschluss 40 beispielsweise mit einem Ladegerät und/oder einem Steuergerät zur Steuerung des Antriebsmotors elektrisch verbindbar sind. Über den Leistungsanschluss 35, 40 wird eine elektrische Leistung zum Laden oder Entladen des elektrischen Energiespeichers 10 entnommen oder bereitgestellt. Eine maximale über den Leistungsanschluss 35, 40 übertragbare elektrische Leistung kann beispielsweise 50 kW bis 500 kW betragen.

In der Ausführungsform sind die elektrischen Energiespeicherzellen 20, 25 als Lithiumionen-Akkus ausgebildet. Um eine lange Haltbarkeit der ersten und zweiten elektrischen Energiespeicherzelle 20, 25 vorzugsweise über eine Lebensdauer des Kraftfahrzeugs sicherzustellen, weist das Kraftfahrzeug ein Batteriemanagementsystem 41 auf, um eine Ladedifferenz zwischen den einzelnen elektrischen Energiespeicherzellen 20, 25 im Rahmen eines Balancing-Vorgangs auszugleichen. Ferner kann mittels des Batteriemanagementsystems 41 wenigstens jeweils ein Betriebsparameter, beispielsweise eine elektrische Spannung, der elektrischen Energiespeicherzelle 20, 25 erfasst und ausgewertet werden.

Die erste elektrische Energiespeicherzelle 20 weist wenigstens eine erste Anschlusslasche 45 und die zweite elektrische Energiespeicherzelle 25 eine zweite Anschlusslasche 50 auf. Die erste und zweite Anschlusslasche 45, 50 ist elektrisch über einen elektrischen Leiter 60 mit dem Batteriemanagementsystem 41 verbunden. Die Anschlusslasche 45, 50 dient somit nicht dazu, elektrische Leistung zum Antrieb des Antriebsmotors des Kraftfahrzeugs bereitzustellen. Auch wird über die Anschlusslasche 45, 50 kein elektrischer Strom zum Schnelladen der elektrischen Energiespeicherzelle 20, 25 übertragen, sondern allenfalls elektrische Leistung zum Balancen der elektrischen Energiespeicherzellen 20, 25.

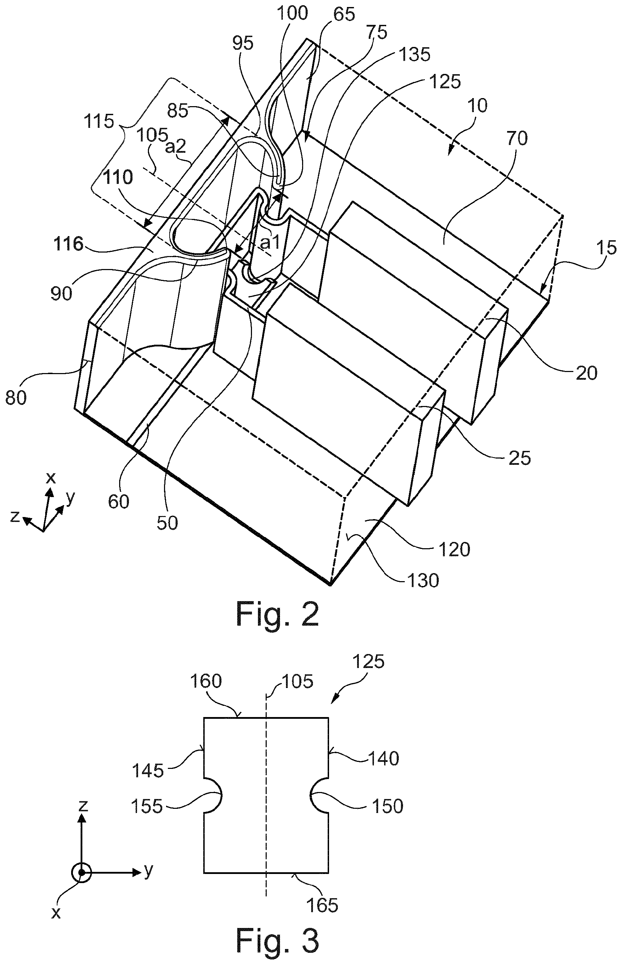

Figur 2 zeigt eine perspektivische Ansicht des in Figur 1 gezeigten elektrischen Energiespeichers 10.

Der elektrische Energiespeicher 10 wird anhand der ersten und zweiten elektrischen Energiespeicherzelle 20, 25 erläutert. Es wird darauf hingewiesen, dass die weiteren elektrischen Energiespeicherzellen 20, 25 des in Figur 1 gezeigten elektrischen Energiespeichers 10 identisch zu dem im Folgenden Erläuterten ausgebildet und mit dem Batteriemanagementsystem 41 verbunden sind. Dabei soll das im Folgenden für die erste und zweite elektrische Energiespeicherzelle 20, 25 Erläuterte ebenso auch für die weiteren ersten und zweiten elektrischen Energiespeicherzellen 20, 25 gelten.

In der Ausführungsform sind die erste und zweite elektrische Energiespeicherzelle 20, 25 beispielhaft als Pouch-Zelle jeweils ausgebildet. Auch eine andere Ausgestaltung der elektrischen Energiespeicherzelle 20, 25 wäre möglich.

Das Gehäuse 15 weist ein erstes Gehäuseteil 65 und ein zweites Gehäuseteil 70 auf. Das erste Gehäuseteil 65 und das zweite Gehäuseteil 70 begrenzen gemeinsam einen Gehäuseinnenraum 75. In dem Gehäuseinnenraum 75 ist die Anordnung der ersten und zweiten elektrischen Energiespeicherzellen 20, 25 angeordnet. Das Gehäuse 15 schützt die elektrischen Energiespeicherzellen 20, 25 vor mechanischer Beschädigung und/oder Verschmutzung. Zusätzlich kann das Gehäuse 15 gedichtet ausgebildet sein und die elektrischen Energiespeicherzellen 20, 25 vor Flüssigkeiten oder aggressiven Gasen schützen. Ferner sind in dem Gehäuseinnenraum 75 die erste und zweite Anschlusslasche 45, 50 angeordnet.

Das erste Gehäuseteil 65 weist einen ersten Gehäuseabschnitt 80 und wenigstens ein erstes bügelförmiges Anpresselement 85 auf. Zusätzlich kann das erste Gehäuseteil 65 ein zweites bügelförmiges Anpresselement 90 aufweisen. Der erste Gehäuseabschnitt 80 ist beispielsweise plattenförmig ausgebildet und erstreckt sich im Wesentlichen in einer xy-Ebene. Innenseitig auf einer dem Gehäuseinnenraum 75 zugewandten Seite sind jeweils das erste Anpresselement 85 und das zweite Anpresselement 90 an dem ersten Gehäuseabschnitt 80 angeordnet und mit dem ersten Gehäuseabschnitt 80 verbunden.

Das erste Anpresselement 85 ist gekrümmt, vorzugsweise bogenförmig, verlaufend ausgebildet. Dabei ist mit einem ersten festen Ende 95 das erste Anpresselement 85 mit dem ersten Gehäuseabschnitt 80 verbunden. Das zweite Anpresselement 90 ist in Querrichtung versetzt zu dem ersten Anpresselement 85 angeordnet. Das zweite Anpresselement 90 ist ebenso bügelförmig ausgebildet und ist innenseitig an dem ersten Gehäuseabschnitt 80 mit einem zweiten festen Ende 116 angebunden. Vorzugsweise sind das erste Anpresselement 85, das zweite Anpresselement 90 sowie der erste Gehäuseabschnitt 80 einstückig und materialeinheitlich, beispielsweise aus einem elektrisch nichtleitenden Werkstoff, beispielsweise Kunststoff, hergestellt. Insbesondere können der erste Gehäuseabschnitt 80, das erste Anpresselement 85 und das zweite Anpresselement 90 in einem Spritzgussverfahren hergestellt werden.

Das erste Anpresselement 85 erstreckt sich von dem ersten festen Ende 95 in dem Gehäuseinnenraum 75 in Richtung des zweiten Anpresselements 90 gekrümmt. An einem ersten freien Ende 100 des ersten Anpresselements 85 ist das erste Anpresselement 85 verrundet ausgebildet. Das zweite Anpresselement 90 ist spiegelsymmetrisch zu einer Symmetrieebene 105, die beispielsweise als xz-Ebene ausgebildet ist, ausgebildet. Die Symmetrieebene 105 ist beispielhaft mittig verlaufend zwischen der ersten elektrischen Energiespeicherzelle 20 und der zweiten elektrischen Energiespeicherzelle 25 sowie zwischen dem ersten und dem zweiten festen Ende 95, 116 angeordnet.

Das zweite Anpresselement 90 weist ein zweites freies Ende 110 auf. Das zweite Anpresselement 90 ragt in den Gehäuseinnenraum 75 und ist in Richtung des ersten Anpresselements 85 hin gekrümmt. An dem zweiten freien Ende 110 ist das zweite Anpresselement 90 verrundet ausgebildet.

Ein erster Abstand a1 des zweiten freien Endes 110 des zweiten Anpresselements 90 zu dem ersten freien Ende 100 des ersten Anpresselements 85 ist geringer als ein zweiter Abstand a2 zwischen dem ersten festen Ende 95 des ersten Anpresselements 85 zu dem zweiten festen Ende 116 des zweiten Anpresselements 90 in Querrichtung.

Ein Teilbereich 115 des ersten Gehäuseabschnitts 80, der sich in Querrichtung (y-Richtung) zwischen dem ersten festen Ende 95 und dem zweiten festen Ende 116 erstreckt, ist beispielsweise plattenförmig in einer xy-Ebene verlaufend ausgebildet. Der Teilbereich 115, das erste Anpresselement 85 und das zweite Anpresselement 90 weisen in einem yz-Querschnitt eine C-förmige Ausgestaltung auf.

Das zweite Gehäuseteil 70 weist einen zweiten Gehäuseabschnitt 120, ein Kontaktelement 125 und den elektrischen Leiter 60 auf. Der zweite Gehäuseabschnitt 120 ist beispielhaft plattenförmig ausgebildet und erstreckt sich im Wesentlichen in einer yz-Ebene. Dabei können der erste Gehäuseabschnitt 80 und der zweite Gehäuseabschnitt 120 beispielsweise geneigt, beispielsweise senkrecht, aneinanderstoßen.

An einer Innenseite 130 des zweiten Gehäuseabschnitts 120 kann beispielsweise als Leiterbahn der elektrische Leiter 60 geführt und mit dem zweiten Gehäuseabschnitt 120 mechanisch verbunden sein. Der zweite Gehäuseabschnitt 120 kann beispielsweise aus einem elektrisch nichtleitfähigen Werkstoff, beispielsweise Kunststoff, spritzgegossen sein. An der Innenseite 130 ist das Kontaktelement 125 angeordnet. Das Kontaktelement 125 weist eine quaderförmige Grundform auf und ragt entlang der x-Achse in den Gehäuseinnenraum 75. Das Kontaktelement 125 ist beispielsweise in Querrichtung zwischen dem ersten freien Ende 100 des ersten Anpresselements 85 und dem zweiten freien Ende 110 des zweiten Anpresselements 90 angeordnet.

Ein drittes festes Ende 135 des Kontaktelements 125 ist zum einen mit der Innenseite 130 mechanisch verbunden. Ferner kontaktiert das dritte feste Ende 135 den elektrischen Leiter 60. Das Kontaktelement 125 weist einen elektrisch leitfähigen Werkstoff auf. Das Kontaktelement 125 kann beispielsweise aus einem metallischen Werkstoff gefertigt sein und am dritten festen Ende 135 beispielsweise mit dem zweiten Gehäuseabschnitt 120 verklebt sein. Auch kann das Kontaktelement 125 aus einem elektrisch leitfähigen Kunststoff gefertigt sein. Dadurch können beispielsweise der zweite Gehäuseabschnitt 120 und das Kontaktelement 125 in einem Zweikomponentenspritzgussverfahren hergestellt werden. Das Kontaktelement 125 ist somit elektrisch mit dem elektrischen Leiter 60 verbunden.

Figur 3 zeigt eine vergrößerte Draufsicht auf das in Figur 2 gezeigte Kontaktelement 125.

Das Kontaktelement 125 weist eine erste Kontaktfläche 140 auf. Die erste Kontaktfläche 140 erstreckt sich in der Ausführungsform beispielhaft in einer xz-Ebene. In Querrichtung gegenüberliegend weist das Kontaktelement 125 eine zweite Kontaktfläche 145 auf. Die zweite Kontaktfläche 145 ist gegenüberliegend zu der ersten Kontaktfläche 140 ausgebildet. In der Ausführungsform sind die erste und zweite Kontaktfläche 140, 145 im Wesentlichen plan ausgebildet.

Zusätzlich kann die erste Kontaktfläche 140 eine erste Aufnahmenut 150 aufweisen. Die erste Aufnahmenut 150 ist beispielhaft nutförmig mit einem halbbogenförmigen Profil, insbesondere halbkreisförmig ausgebildet. Dabei kann die erste Aufnahmenut 150 in z-Richtung in mittiger Lage bezüglich einer maximalen Erstreckung in z-Richtung des Kontaktelements 125 angeordnet sein.

Zusätzlich weist beispielhaft die zweite Kontaktfläche 145 eine zweite Aufnahmenut 155 auf, wobei die zweite Aufnahmenut 155 beispielhaft in z-Richtung auf gleicher Höhe zu der ersten Aufnahmenut 150 angeordnet ist. Dadurch sind die erste Aufnahmenut 150 und die zweite Aufnahmenut 155 in einer gemeinsamen xy-Ebene angeordnet. Die zweite Aufnahmenut 155 kann die gleiche Konturierung wie die erste Aufnahmenut 150 aufweisen. So kann die zweite Aufnahmenut 155 beispielsweise nutförmig mit einem halbbogenförmigen Profil, insbesondere mit einem halbkreisförmigen Profil, ausgeformt sein. Auf die erste und zweite Aufnahmenut 150, 155 kann auch verzichtet werden.

Eine erste Stegfläche 160, die die erste Kontaktfläche 140 mit der zweiten Kontaktfläche 145 verbindet, kann plan ausgebildet sein. Die erste Stegfläche 160 ist beispielhaft auf einer zur elektrischen Energiespeicherzelle 20, 25 abgewandten Seite in z-Richtung angeordnet. Eine zweite Stegfläche 165 des Kontaktelements 125, die ebenso wie die erste Stegfläche 160 die erste Kontaktfläche 140 mit der zweiten Kontaktfläche 145 verbindet, kann plan ausgebildet sein. Die zweite Stegfläche 165 ist auf einer der elektrischen Energiespeicherzelle 20, 25 zugewandten Seite angeordnet. Die erste Stegfläche 160 und die zweite Stegfläche 165 verlaufen parallel zueinander und können jeweils in einer xy-Ebene verlaufend angeordnet sein.

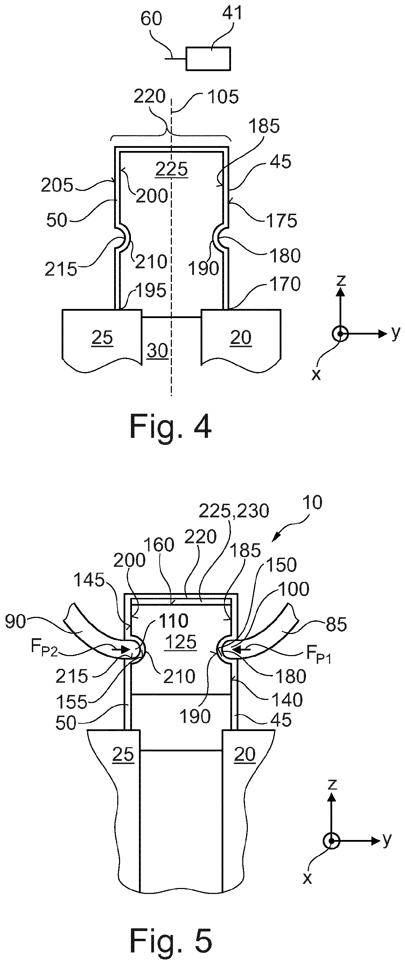

Figur 4 zeigt eine Draufsicht auf den elektrischen Energiespeicher 10 in teilmontiertem Zustand.

Die erste Anschlusslasche 45 ist an einem Ende mit einem ersten Anschluss 170 für das Batteriemanagementsystem 41 der ersten elektrischen Energiespeicherzelle 20 elektrisch und mechanisch verbunden. Beispielsweise kann die erste Anschlusslasche 45 an den ersten Anschluss 170 angelötet oder punktgeschweißt sein. Die erste Anschlusslasche 45 weist ein bandförmiges Material auf und erstreckt sich in ihrer Haupterstreckungsrichtung im Wesentlichen in einer xz-Ebene.

Zusätzlich kann die erste Anschlusslasche 45 an einer ersten Seitenfläche 175 eine erste Einbuchtung 180 aufweisen. An einer zweiten Seitenfläche 185, die gegenüberliegend in Querrichtung zu der ersten Seitenfläche 175 angeordnet ist, weist die erste Anschlusslasche 45 eine erste Ausbuchtung 190 auf. Die erste Einbuchtung 180 und die erste Ausbuchtung 190 formen sich gegeneinander durch das bandförmige Material aus. Beispielhaft ist im Bereich der ersten Ausbuchtung 190 und der ersten Einbuchtung 180 die erste Anschlusslasche 45 bogenförmig geführt.

Dadurch sind die erste Einbuchtung 180 und die erste Ausbuchtung 190 komplementär zueinander ausgebildet und in z-Richtung im Wesentlichen auf gleicher Höhe angeordnet. Beispielhaft sind die erste Einbuchtung 180 und die erste Ausbuchtung 190 im Wesentlichen auf mittiger Höhe in z-Richtung bezüglich einer maximalen Erstreckung der ersten Anschlusslasche 45 angeordnet. Auch eine andere Positionierung der ersten Einbuchtung 180 und der ersten Ausbuchtung 190 ist möglich. Dabei kann vorzugsweise die erste Ausbuchtung 190 korrespondierend zu der ersten Aufnahmenut 150 ausgeformt sein.

Eine Konturierung der ersten Einbuchtung 180 ist im Wesentlichen zu dem ersten freien Ende 100 des ersten Anpresselements 85 ausgeformt. Somit sind in der Ausführungsform die erste Aufnahmenut 150 und die erste Einbuchtung 180, die erste Ausbuchtung 190 und das erste freie Ende 100 aufeinander abgestimmt und angepasst.

Die zweite Anschlusslasche 50 erstreckt sich im Wesentlichen parallel zu der ersten Anschlusslasche 45. Dabei verläuft beispielhaft in der Haupterstreckungsrichtung die zweite Anschlusslasche 50 in einer xz-Ebene. Die zweite Anschlusslasche 50 ist an einer Seite mit einem zweiten Anschluss 195 der zweiten elektrischen Energiespeicherzelle 25 für das Batteriemanagementsystem 41 elektrisch und mechanisch verbunden. Dies kann beispielsweise dadurch erfolgen, dass die zweite Anschlusslasche 50 beispielsweise an den zweiten Anschluss 195 angelötet oder angeschweißt ist.

Die zweite Anschlusslasche 50 weist eine dritte Seitenfläche 200 und eine vierte Seitenfläche 205 auf. Die zweite Anschlusslasche 50 ist aus einem Bandmaterial gefertigt. Dabei ist die vierte Seitenfläche 205 in Querrichtung gegenüberliegend zu der dritten Seitenfläche 200 angeordnet. Die dritte Seitenfläche 200 ist auf einer der ersten Anschlusslasche 45 zugewandten Seite der zweiten Anschlusslasche 50 angeordnet. Die vierte Seitenfläche 205 ist auf einer der ersten Anschlusslasche 45 abgewandten Seite der zweiten Anschlusslasche 50 angeordnet.

In der dritten Seitenfläche 200 ist eine zweite Ausbuchtung 210 und in der vierten Seitenfläche 205 ist eine zweite Einbuchtung 215 angeordnet. Die zweite Einbuchtung 215 ist beispielhaft spiegelsymmetrisch bezogen auf die Symmetrieebene 105 zu der ersten Einbuchtung 180 ausgebildet. Auch kann die zweite Ausbuchtung 210 spiegelsymmetrisch bezogen auf die Symmetrieebene 105 zu der ersten Ausbuchtung 190 ausgeformt sein.

Beispielsweise kann die zweite Ausbuchtung 210 und die zweite Einbuchtung 215 in z-Richtung auf gleicher Höhe und somit in einer gemeinsamen xy-Ebene zu der ersten Einbuchtung 180 und der ersten Ausbuchtung 190 angeordnet sein. Beispielhaft ist im Bereich der zweiten Ausbuchtung 210 und der zweiten Einbuchtung 215 die zweite Anschlusslasche 50 bogenförmig geführt.

Die zweite Ausbuchtung 210 und somit respektive auch die komplementär zu der zweiten Ausbuchtung 210 ausgebildete zweite Einbuchtung 215 kann zumindest abschnittsweise korrespondierend zu der zweiten Aufnahmenut 155 ausgebildet sein. Die zweite Einbuchtung 215 kann im Wesentlichen korrespondierend zu dem zweiten freien Ende 110 des zweiten Anpresselements 90 ausgebildet sein.

Auf einer der elektrischen Energiespeicherzelle 20, 25 abgewandten Seite in z-Richtung ist die erste Anschlusslasche 45 mittels eines Verbindungsstegs 220 mechanisch und elektrisch mit der zweiten Anschlusslasche 50 verbunden. Der Verbindungssteg 220 kann ebenso wie die Anschlusslasche 45, 50 aus Bandmaterial gefertigt sein. Der Verbindungssteg 220 erstreckt sich beispielhaft in einer Ebene geneigt zu der ersten Anschlusslasche 45 und der zweiten Anschlusslasche 50 und ist im Wesentlichen plan ausgebildet. Von besonderem Vorteil ist, wenn die erste Anschlusslasche 45, der Verbindungssteg 220 und die zweite Anschlusslasche 50 einstückig und materialeinheitlich aus dem Bandmaterial gefertigt und gebogen sind.

Die Anschlusslasche 45, 50 sowie der Verbindungssteg 220 begrenzen einen Aufnahmeraum 225 in Querrichtung sowie nach oben hin in z-Richtung. Nach unten hin in z-Richtung wird der Aufnahmeraum 225 zumindest bereichsweise durch die erste und/oder zweite elektrische Energiespeicherzelle 20, 25 und gegebenenfalls durch die Kühlvorrichtung 30 begrenzt.

In Längsrichtung ist der Aufnahmeraum 225 bezogen auf die erste und zweite Anschlusslasche 45, 50 und den Verbindungssteg 220 offen ausgebildet.

Figur 5 zeigt einen Ausschnitt einer Schnittansicht entlang einer in Figur 1 gezeigten Schnittebene B-B durch den in Figur 1 gezeigten elektrischen Energiespeicher 10.

In montiertem Zustand des elektrischen Energiespeichers 10 greift das Kontaktelement 125 in den Aufnahmeraum 225 ein. Dabei ist in z-Richtung das Kontaktelement 125 beispielhaft beabstandet zum Verbindungssteg 220 und zur elektrischen Energiespeicherzelle 20, 25 angeordnet.

In montiertem Zustand greift das erste Anpresselement 85 mit dem ersten freien Ende 100 in die erste Einbuchtung 180 ein. Dabei ist vorzugsweise das erste Anpresselement 85 vorgespannt und stellt eine im Wesentlichen in Querrichtung wirkende erste Presskraft F_{P1} bereit. Mit der ersten Presskraft F_{P1} presst das erste freie Ende 100 gegen die erste Einbuchtung 180. Dabei kann insbesondere das erste freie Ende 100 flächig an der ersten Einbuchtung 180 anliegen.

Die erste Ausbuchtung 190 greift in die erste Aufnahmenut 150 ein und liegt vorzugsweise flächig an der ersten Aufnahmenut 150 an. Dabei kontaktiert die erste Ausbuchtung 190 die erste Aufnahmenut 150 mechanisch und elektrisch, sodass die erste Anschlusslasche 45 elektrisch mit dem Kontaktelement 125 verbunden ist.

Durch das Anpressen der ersten Anschlusslasche 45 mittels der ersten Presskraft F_{P1} an dem Kontaktelement 125 wird neben dem elektrischen Kontakt auch ein Formschluss und vorzugsweise auch ein Reibschluss zwischen erster Anschlusslasche 45 und dem Kontaktelement 25 bereitgestellt, sodass der elektrische Kontakt zwischen der ersten Anschlusslasche 45 und dem Kontaktelement 125 auch bei Vibrationen innerhalb des Fahrzeugs sichergestellt ist.

In Querrichtung gegenüberliegend greift mit dem zweiten freien Ende 110 das zweite Anpresselement 90 in die zweite Einbuchtung 215 ein. Vorzugsweise ist das zweite Anpresselement 90 vorgespannt und presst mit einer zweiten Presskraft F_{P2}, die entgegen der ersten Presskraft F_{P1} gerichtet ist und vorzugsweise im Wesentlichen identisch stark zu der ersten Presskraft F_{P1} ist, das zweite freie Ende 110 in die zweite Einbuchtung 215. Mittels der zweiten Presskraft F_{P2} wird die zweite Ausbuchtung 210 in die zweite Aufnahmenut 155 gepresst, sodass die zweite Ausbuchtung flächig an der zweiten Aufnahmenut 155 anliegt und besonders gut sowohl elektrisch als auch mechanisch mit dem Kontaktelement 125 verbunden ist. Durch die im Wesentlichen identische erste und zweite Presskraft F_{P1}, F_{P2}, die gegeneinander gerichtet sind, wird eine ungewollte Verformung, insbesondere eine Verbiegung des Kontaktelements 125 vermieden.

Zusätzlich kann mit der zweiten Seitenfläche 185 die erste Anschlusslasche 45 an der ersten Kontaktfläche 140 beispielsweise flächig anliegen. Ebenso kann mit der dritten Seitenfläche 200 die zweite Anschlusslasche 50 an der zweiten Kontaktfläche 145 beispielsweise flächig anliegen, sodass ein besonders guter elektrischer Kontakt zwischen der Anschlusslasche 45, 50 und dem Kontaktelement 125 sichergestellt ist.

In z-Richtung ist der Verbindungssteg 220 beabstandet zu der ersten Seitenfläche 160 angeordnet. Durch einen zwischen der ersten Seitenfläche 160 des Kontaktelements 125 und dem Verbindungssteg 220 angeordneten Spalt 230 wird eine Überbestimmung des Gehäuses 15 vermieden und somit eine gute Montierbarkeit des elektrischen Energiespeichers 10 sichergestellt.

In einer zur Herstellung und Montage des in den Figuren 1 bis 5 gezeigten elektrischen Energiespeichers 10 wird in einem ersten Schritt das erste Gehäuseteil 65 beispielsweise in einem Spritzgussverfahren hergestellt.

In einem zweiten Schritt wird das zweite Gehäuseteil 70 beispielsweise in einem Zweikomponentenspritzgussverfahren hergestellt. Zusätzlich wird beispielsweise der elektrische Leiter 60 an der Innenseite 130 des zweiten Gehäuseabschnitts 120 ausgebildet. Dies kann beispielsweise dadurch erfolgen, dass der elektrische Leiter 60 wie das Kontaktelement 125 aus einem elektrisch leitfähigen Kunststoff im Zweikomponentenspritzgussverfahren gespritzt wird. Alternativ wäre auch möglich, dass der elektrische Leiter 60 aufgeklebt wird oder im Rahmen eines Belichtungs- und Ätzverfahrens analog zu einer Leiterbahn einer Leiterplatte hergestellt wird.

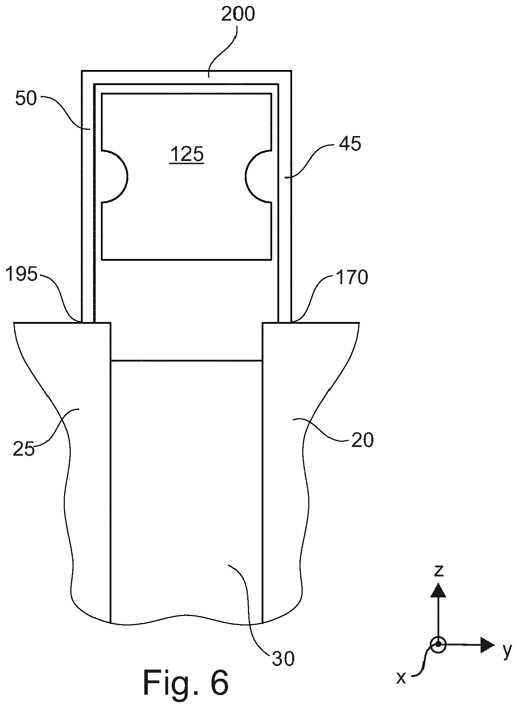

Figur 6 zeigt eine Draufsicht auf eine Anordnung aus der ersten und zweiten elektrischen Energiespeicherzelle 20, 25 und der ersten und zweiten Anschlusslasche 45, 50 und dem Verbindungssteg 220 nach einem dritten Schritt.

In einem dritten Schritt werden aus einem Bandmaterial die erste Anschlusslasche 45, der Verbindungssteg 220 und die zweite Anschlusslasche 50 einstückig und materialeinheitlich ausgeformt und gebogen. Nach dem Biegen sind die erste und zweite Anschlusslasche 45, 50 und der Verbindungssteg 220 im Wesentlichen U-förmig ausgebildet. Dabei kann auf das Einprägen der ersten und/oder zweiten Einbuchtung 180, 215 und/oder der zweiten Ausbuchtung 190, 210 verzichtet werden (vgl. Figur 6).

In einem auf den dritten Schritt folgenden vierten Schritt wird die erste Anschlusslasche 45 mit dem ersten Anschluss 170 elektrisch und mechanisch verbunden. Dies kann beispielsweise im Rahmen eines Löt- oder Schweißverfahrens erfolgen. Ferner wird in einem vierten Schritt die zweite Anschlusslasche 50 mit dem zweiten Anschluss 195 mechanisch und elektrisch verbunden. Dies kann ebenso beispielsweise mittels eines Schweiß- oder Lötverfahrens erfolgen, wobei vorteilhafterweise die erste Anschlusslasche 45 und die zweite Anschlusslasche 50 mit dem jeweils zugeordneten Anschluss 170, 195 mittels des gleichen Verbindungsverfahrens mechanisch und elektrisch verbunden werden.

In einem fünften Schritt wird die erste elektrische Energiespeicherzelle 20 zusammen mit der zweiten elektrischen Energiespeicherzelle 25 und der daran befestigten ersten und zweiten Anschlusslasche 45, 50 und dem Verbindungssteg 220 in den Gehäuseinnenraum 75 eingesetzt.

Dabei greift das Kontaktelement 125 in den Aufnahmeraum 225 ein. Dabei kann die erste Kontaktfläche 140 in Kontakt mit der zweiten Seitenfläche 185 und die zweite Kontaktfläche 145 in Kontakt mit der dritten Seitenfläche 200 gebracht werden. In diesem Schritt ist die erste Anschlusslasche 45 und die zweite Anschlusslasche 50 im Wesentlichen noch plattenförmig ausgebildet. Das Einfügen der ersten und zweiten Energiespeicherzelle 20, 25 und der Anschlusslasche 45, 50 und des Verbindungsstegs 220 in den Gehäuseinnenraum 75 erfolgt vorzugsweise in einer geradlinigen Bewegung entlang der x-Achse. Die Bewegung wird so lange durchgeführt, bis die elektrische Energiespeicherzelle 20, 25 sich in ihrer Endposition befindet. Dies kann dann der Fall sein, wenn beispielsweise die elektrische Energiespeicherzelle 20, 25 an der Innenseite 130 des zweiten Gehäuseabschnitts 120 anliegt (vgl. Figur 2).

In einem auf den fünften Schritt folgenden sechsten Schritt wird das erste Gehäuseteil 65 montiert. Dabei wird das erste Gehäuseteil 65 beispielsweise in z-Richtung auf das zweite Gehäuseteil 70 aufgeschoben. Dabei werden die erste und zweite Anschlusslasche 45, 50 und der Verbindungssteg 220 zwischen das erste freie Ende 100 und das zweite freie Ende 110 bereichsweise eingefügt. Das erste Anpresselement 85 und das zweite Anpresselement 90 sind vorzugsweise vorgespannt. Das Bandmaterial der ersten Anschlusslasche 45 ist beispielsweise so dünnwandig ausgebildet, dass die erste Presskraft F_{P1} in der Lage ist, die erste Anschlusslasche 45 dahingehend zu verformen, dass das erste freie Ende 100 als Stempel und das Kontaktelement 125 als Matrize in Verbindung mit der ersten Presskraft F_{P1} wirken und die erste Einbuchtung 180 und die erste Ausbuchtung 190 in die erste Anschlusslasche 45 plastisch einformen.

Analog dazu presst das zweite freie Ende 110 auf die vierte Seitenfläche 205 der zweiten Anschlusslasche 50. Das zweite freie Ende 110 wirkt als Stempel und die zweite Aufnahmenut 155 wirkt als Matrize. Mit der zweiten Presskraft F_{P2} formt das zweite freie Ende 110 die zweite Einbuchtung 215 und die zweite Aufnahmenut 155 die zweite Ausbuchtung 210 plastisch in der zweiten Anschlusslasche 50 aus.

Die zweite Presskraft F_{P2} ist dabei gegen die erste Presskraft F_{P1} gerichtet, sodass eine zuverlässige Ausformung der Einbuchtung 180, 215 und der Ausbuchtung 190, 210 am Kontaktelement 125 sichergestellt ist. Die zweite Presskraft F_{P2} ist dabei derart gewählt, dass die zweite Presskraft F_{P2} plastisch die zweite Anschlusslasche 50 zur Ausbildung der zweiten Ausbuchtung 210 und der zweiten Einbuchtung 215 verformt.

Beim Ausformen der Einbuchtung 180, 215 und der Ausbuchtung 190, 210 bewegt sich der Verbindungssteg 220 in z-Richtung in Richtung der elektrischen Energiespeicherzelle 20, 25. Eine Länge der ersten Anschlusslasche 45 und eine Länge der zweiten Anschlusslasche 50 vor dem Aufschieben des ersten Gehäuseteils 65 ist vorzugsweise so gewählt, dass während des Verformens der Anschlusslasche 45, 50 durch das erste Gehäuseteil 65 ein Anschlagen des Verbindungsstegs 220 an der ersten Stegfläche 160 des Kontaktelements 125 vermieden wird. Dies stellt sicher, dass das Anpresselement 85, 90 jeweils mit dem zugeordneten freien Ende 100, 110 die zugeordnete Anschlusslasche 45, 50 bis in einen Grund der Aufnahmenut 150, 155 ausformen kann. Dadurch entspricht im Wesentlichen eine Kontur der ersten Ausbuchtung 190 einer Kontur der ersten Aufnahmenut 150 und eine Kontur der zweiten Ausbuchtung 210 einer Kontur der zweiten Aufnahmenut 155.

Von besonderem Vorteil ist, wenn die erste Aufnahmenut 150 und die zweite Aufnahmenut 155 in Querrichtung derart tief in dem Kontaktelement 125 ausgeformt sind, dass das erste freie Ende 100 in Querrichtung in der ersten Aufnahmenut 150 und das zweite freie Ende 110 in Querrichtung in der zweiten Aufnahmenut 155 angeordnet ist.

Ferner ist es von Vorteil, wenn das erste Anpresselement 85 und das zweite Anpresselement 90 derart vorgespannt sind, dass auch nach dem Ausformen der jeweils zugeordneten Einbuchtung 180, 215 das freie Ende 100, 110 in die Ausbuchtung 190, 210 in die Aufnahmenut 150, 155 drückt. Dadurch wird zusätzlich zum Formschluss ein Reibschluss zwischen Ausbuchtung 190, 215 und der zugeordneten Aufnahmenut 150, 155 erzielt. Durch den flächigen Kontakt zwischen Kontaktelement 125 und Anschlusslasche 45, 50 wird zusätzlich zur mechanischen Kontaktierung auch ein elektrischer Kontakt zwischen der Anschlusslasche 45, 50 und dem Kontaktelement 125 ausgebildet. Der Kontakt zwischen der Anschlusslasche 45, 50 und dem Kontaktelement 125 wird somit beim Aufschieben/Anbringen des ersten Gehäuseteils 65 auf das zweite Gehäuseteil 70 automatisiert hergestellt, ohne dass weitere Arbeiten und/oder Werkzeug notwendig sind.

Dadurch kann der elektrische Energiespeicher 10 besonders schnell und kostengünstig montiert werden. Auch ist eine zerstörungsfreie reversible Demontage möglich. Dazu ist nur das erste Gehäuseteil 65 vom zweiten Gehäuseteil 70 zu entfernen. Im Anschluss daran kann die erste elektrische Energiespeicherzelle 20 und die zweite elektrische Energiespeicherzelle 25 zusammen mit der befestigen Anschlusslasche 45, 50 und dem Verbindungssteg 220 aus dem Gehäuseinnenraum 75 entfernt werden. Dadurch können auch auf einfache Art und Weise einzelne elektrische Energiespeicherzellen 20, 25, beispielsweise bei Beschädigung, ersetzt werden.

Das erste Gehäuseteil 65 kann mit dem zweiten Gehäuseteil 70 mittels nicht dargestellter Befestigungsmittel, beispielsweise Rastmittel, verbunden sein, sodass der erste Gehäuseabschnitt 80 und der zweite Gehäuseabschnitt 120 aneinanderstoßen.

Die oben beschriebene Ausgestaltung des elektrischen Energiespeichers 10 hat den weiteren Vorteil, dass keine zusätzliche Verdrahtung der Anschlusslaschen 45, 50 notwendig ist, um die Anschlusslasche 45, 50 über den elektrischen Leiter 60 mit dem Batteriemanagementsystem 41 zu verbinden. Ferner ist die Anzahl von freiliegenden elektrischen Leitungen innerhalb des Gehäuseinnenraums 75 reduziert.

### Bezugszeichenliste

- 10: Elektrischer Energiespeicher
- 15: Gehäuse
- 20: erste elektrische Energiespeicherzelle
- 25: zweite elektrische Energiespeicherzelle
- 30: Kühlvorrichtung
- 35: erster Leistungsanschluss
- 40: zweiter Leistungsanschluss
- 41: Batteriemanagementsystem (BMS)
- 45: erste Anschlusslasche
- 50: zweite Anschlusslasche
- 60: elektrischer Leiter
- 65: erstes Gehäuseteil
- 70: zweites Gehäuseteil
- 75: Gehäuseinnenraum
- 80: erster Gehäuseabschnitt
- 85: erstes Anpresselement
- 90: zweites Anpresselement
- 95: erstes festes Ende
- 100: erstes freies Ende
- 105: Symmetrieebene
- 110: zweites freies Ende
- 115: Teilbereich
- 116: zweites festes Ende
- 120: zweiter Gehäuseabschnitt
- 125: Kontaktelement
- 130: Innenseite
- 135: drittes festes Ende
- 140: erste Kontaktfläche
- 145: zweite Kontaktfläche
- 150: erste Aufnahmenut
- 155: zweite Aufnahmenut
- 160: erste Stegfläche (des Kontaktelements)
- 165: zweite Stegfläche (des Kontaktelements)
- 170: erster Anschluss
- 175: erste Seitenfläche (der Anschlusslasche)
- 180: erste Einbuchtung
- 185: zweite Seitenfläche (der Anschlusslasche)
- 190: erste Ausbuchtung
- 195: zweiter Anschluss
- 200: dritte Seitenfläche
- 205: vierte Seitenfläche
- 210: zweite Ausbuchtung
- 215: zweite Einbuchtung
- 220: Verbindungssteg
- 225: Aufnahmeraum
- 230: Spalt

## Patentansprüche

1. Elektrischer Energiespeicher (10), insbesondere eine Traktionsbatterie eines elektrischen Kraftfahrzeugs,
- aufweisend ein Gehäuse (15), eine erste elektrische Energiespeicherzelle (20) und eine erste elektrisch leitfähige Anschlusslasche (45),
- wobei das Gehäuse (15) ein einen Gehäuseinnenraum (75) begrenzendes erstes Gehäuseteil (65) und ein zweites Gehäuseteil (70) aufweist,
- wobei in dem Gehäuseinnenraum (75) die erste elektrische Energiespeicherzelle (20) und die erste Anschlusslasche (45) angeordnet sind und die erste Anschlusslasche (45) mit einem ersten elektrischen Anschluss (170) der ersten elektrischen Energiespeicherzelle (20) elektrisch verbunden ist,
- wobei das zweite Gehäuseteil (70) innenseitig ein elektrisch leitfähiges Kontaktelement (125) aufweist, das entlang einer ersten Richtung (x) von dem zweiten Gehäuseteil (70) in den Gehäuseinnenraum (75) ragt,
- wobei das erste Gehäuseteil (65) einen den Gehäuseinnenraum (75) verschließenden ersten Gehäuseabschnitt (80) und ein erstes bügelförmig ausgebildetes Anpresselement (85) aufweist,
- wobei das erste Anpresselement (85) mit einem ersten festen Ende (95) innenseitig an dem ersten Gehäuseabschnitt (80) befestigt ist,
- wobei die erste Anschlusslasche (45) zumindest abschnittsweise zwischen dem ersten Anpresselement (85) und dem Kontaktelement (125) angeordnet ist,
- wobei ein erstes freies Ende (100) des ersten Anpresselements (85) die erste Anschlusslasche (45) an das Kontaktelement (125) zur elektrischen Verbindung der ersten Anschlusslasche (45) mit dem Kontaktelement (125) anpresst.

2. Elektrischer Energiespeicher (10) nach Anspruch 1,
- aufweisend eine in einer zweiten Richtung (y) geneigt zu der ersten elektrischen Energiespeicherzelle (20) versetzt angeordnete zweite elektrische Energiespeicherzelle (25) und eine zweite Anschlusslasche (50),
- wobei die zweite Anschlusslasche (50) mit einem zweiten elektrischen Anschluss (195) der zweiten elektrischen Energiespeicherzelle (25) verbunden ist,
- wobei das erste Gehäuseteil (65) ein zweites bügelförmig ausgebildetes Anpresselement (90) aufweist, das in der zweiten Richtung (y) versetzt zu dem ersten Anpresselement (85) angeordnet ist,
- wobei ein zweites festes Ende (116) des zweiten Anpresselements (90) an dem ersten Gehäuseabschnitt (80) befestigt ist,
- wobei die zweite Anschlusslasche (50) auf einer zur ersten Anschlusslasche (45) gegenüberliegenden Seite zwischen dem zweiten Anpresselement (90) und dem Kontaktelement (125) angeordnet ist,
- wobei ein zweites freies Ende (110) des zweiten Anpresselements (90) die zweite Anschlusslasche (50) an das Kontaktelement (125) zur elektrischen Verbindung der zweiten Anschlusslasche (50) mit dem Kontaktelement (125) anpresst.

3. Elektrischer Energiespeicher (10) nach einem der vorhergehenden Ansprüche,
- wobei die erste Anschlusslasche (45) eine erste Seitenfläche (175) und eine gegenüberliegend zu der ersten Seitenfläche (175) angeordnete zweite Seitenfläche (185) aufweist,
- wobei die erste Seitenfläche (175) dem ersten Anpresselement (85) zugewandt ist und die zweite Seitenfläche (185) dem Kontaktelement (125) zugewandt ist,
- wobei in der ersten Seitenfläche (175) eine erste Einbuchtung (180) angeordnet ist,
- wobei in die erste Einbuchtung (180) das erste freie Ende (100) des ersten Anpresselements (85) eingreift.

4. Elektrischer Energiespeicher (10) nach Anspruch 3,
- wobei die erste Einbuchtung (180) an der zweiten Seitenfläche (185) eine erste Ausbuchtung (190) ausformt,
- wobei das Kontaktelement (125) an einer umfangsseitig angeordneten ersten Kontaktfläche (140) eine erste Aufnahmenut (150) aufweist,
- wobei die erste Ausbuchtung (190) in die erste Aufnahmenut (150) eingreift.

5. Elektrischer Energiespeicher (10) nach einem der vorhergehenden Ansprüche,
- wobei das Kontaktelement (125) eine im Wesentlichen quaderförmige Grundform aufweist,
- wobei das Kontaktelement (125) umfangsseitig eine zweite Kontaktfläche (145) aufweist,
- wobei die zweite Anschlusslasche (50) an die zweite Kontaktfläche (145) angepresst ist.

6. Elektrischer Energiespeicher (10) nach Anspruch 5,
- wobei die zweite Kontaktfläche (145) eine zweite Aufnahmenut (155) aufweist,
- wobei die zweite Anschlusslasche (50) eine dritte Seitenfläche (200) und eine gegenüberliegend zu der dritten Seitenfläche (200) angeordnete vierte Seitenfläche (205) aufweist,
- wobei die dritte Seitenfläche (200) dem Kontaktelement (125) zugewandt ist und die vierte Seitenfläche (205) dem zweiten Anpresselement (90) zugewandt ist,
- wobei in der vierten Seitenfläche (205) eine zweite Einbuchtung (215) und in der dritten Seitenfläche (200) eine zweite Ausbuchtung (210) angeordnet ist,
- wobei in die zweite Einbuchtung (215) das zweite freie Ende (110) des zweiten Anpresselements (90) eingreift,
- wobei die zweite Ausbuchtung (210) in die zweite Aufnahmenut (155) eingreift.

7. Elektrischer Energiespeicher (10) nach einem der vorhergehenden Ansprüche,
- wobei das zweite Gehäuseteil (70) einen elektrischen Leiter (60) und einen den Gehäuseinnenraum (75) begrenzenden zweiten Gehäuseabschnitt (120) aufweist,
- wobei der elektrische Leiter (60) mit dem zweiten Gehäuseabschnitt (120) mechanisch verbunden ist, wobei der elektrische Leiter (60) mit dem Kontaktelement (125) elektrisch verbunden ist,
- wobei der elektrische Leiter (60) mit einem Batteriemanagementsystem elektrisch verbindbar ist.

8. Elektrischer Energiespeicher (10) nach einem der vorhergehenden Ansprüche,
- wobei das erste Anpresselement (85) und der erste Gehäuseabschnitt (80) einstückig und materialeinheitlich ausgebildet sind.

9. Elektrischer Energiespeicher (10) nach einem der Ansprüche 2 bis 8,
- wobei das erste Anpresselement (85), das zweite Anpresselement (90) und der zwischen dem ersten Anpresselement (85) und dem zweiten Anpresselement (90) angeordnete erste Gehäuseabschnitt (80) C-förmig ausgebildet sind.

10. Elektrischer Energiespeicher (10) nach einem der Ansprüche 2 bis 9,
- aufweisend einen Verbindungssteg (220),
- wobei der Verbindungssteg (220) zwischen der ersten Anschlusslasche (45) und der zweiten Anschlusslasche (50) angeordnet ist,
- wobei der Verbindungssteg (220) die erste Anschlusslasche (45) auf einer zur ersten elektrischen Energiespeicherzelle (20) abgewandten Seite mit der zweiten Anschlusslasche (50) elektrisch und mechanisch verbindet,
- wobei sich der Verbindungssteg (220) entlang der zweiten Richtung (y) erstreckt,
- wobei der Verbindungssteg (220) auf einer zur ersten elektrischen Energiespeicherzelle (20) abgewandten Seite des Kontaktelements (125) am Kontaktelement (125) vorbeigeführt ist.

11. Elektrischer Energiespeicher (10) nach Anspruch 10,
- wobei die erste Anschlusslasche (45), die zweite Anschlusslasche (50) und der Verbindungsteg (220) aus einem Bandmaterial einstückig und materialeinheitlich ausgeformt sind.

12. Verfahren zur Montage eines elektrischen Energiespeichers (10) nach einem der vorhergehenden Ansprüche,
- wobei die erste elektrische Energiespeicherzelle (20), das Gehäuse (15) mit dem ersten Gehäuseteil (65) und dem zweiten Gehäuseteil (70) und die erste Anschlusslasche (45) bereitgestellt werden,
- wobei die erste Anschlusslasche (45) mit dem ersten Anschluss (170) der ersten elektrischen Energiespeicherzelle (20) elektrisch verbunden wird,
- wobei die erste Anschlusslasche (45) und die erste elektrische Energiespeicherzelle (20) in dem Gehäuseinnenraum (75) derart angeordnet werden, dass die erste Anschlusslasche (45) zumindest abschnittsweise neben oder an dem Kontaktelement (125) angeordnet ist,
- wobei das erste Gehäuseteil (65) an dem zweiten Gehäuseteil (70) angeordnet wird,
- wobei das erste freie Ende (100) des ersten Anpresselements (85) die erste Anschlusslasche (45) an das Kontaktelement (125) presst.

13. Verfahren nach Anspruch 12,
- wobei die erste Anschlusslasche (45), eine zweite Anschlusslasche (50) und ein Verbindungssteg (220) aus einem Bandmaterial U-förmig gebogen werden, sodass der Verbindungssteg (220) zwischen der ersten Anschlusslasche (45) und der zweiten Anschlusslasche (50) angeordnet ist und im Wesentlichen sich geneigt zu der ersten Anschlusslasche (45) erstreckt,
- wobei die zweite elektrische Energiespeicherzelle (25) bereitgestellt wird,
- wobei die zweite Anschlusslasche (50) mit dem zweiten Anschluss (195) der zweiten elektrischen Energiespeicherzelle (25) elektrisch verbunden wird,
- wobei das Kontaktelement (125) zwischen dem Verbindungssteg (220) und der ersten elektrischen Energiespeicherzelle (20) sowie zwischen der ersten Anschlusslasche (45) und der zweiten Anschlusslasche (50) eingefügt wird.

14. Verfahren nach Anspruch 12 oder 13,
- wobei die erste Anschlusslasche (45) zumindest abschnittsweise plattenförmig ausgebildet ist,
- wobei das erste Anpresselement (85) mit einer ersten Presskraft (F_{P1}) auf die erste Anschlusslasche (45) wirkt,
- wobei die erste Presskraft (F_{P1}) die erste Anschlusslasche (45) in eine erste Aufnahmenut (150) des Kontaktelements (125) presst und die erste Anschlusslasche (45) plastisch eine erste Einbuchtung (180) an einer ersten Seitenfläche (175) der ersten Anschlusslasche (45) und eine erste Ausbuchtung (190) an einer zweiten Seitenfläche (185) der ersten Anschlusslasche (45) ausformt.

15. Verfahren nach Anspruch 13 oder 14,
- wobei die zweite Anschlusslasche (50) plattenförmig ausgebildet ist,
- wobei ein zweites Anpresselement (90) des zweiten Gehäuseteils (70) mit einer zweiten Presskraft (F_{P2}) auf die zweite Anschlusslasche (50) wirkt,
- wobei die zweite Presskraft (F_{P2}) gegen die erste Presskraft (F_{P1}) gerichtet ist,
- wobei die zweite Presskraft (F_{P2}) die zweite Anschlusslasche (50) in eine zweite Aufnahmenut (155) des Kontaktelements (125) presst, die auf einer der ersten Aufnahmenut (150) gegenüberliegenden Seite des Kontaktelements (125) angeordnet ist, und plastisch eine zweite Einbuchtung (215) und eine zweite Ausbuchtung (210) einformt.
